# EUROPÄISCHE PATENTSCHRIFT

(11) **EP 3 228 407 B1**
(45) Veröffentlichungstag und Bekanntmachung des Hinweises auf die Patenterteilung: **09.01.2019**
(21) Anmeldenummer: 17164906.4
(22) Anmeldetag: 05.04.2017
(51) Int. Cl.: B23K 26/342, B22F 3/105, B29C 64/241, B29C 64/245, B33Y 30/00

(54) **ARBEITSTISCH FÜR DIE ADDITIVE FERTIGUNG**
WORK TABLE FOR ADDITIVE MANUFACTURING
PLATEAU DE TRAVAIL POUR FABRICATION ADDITIVE

(30) Priorität: 07.04.2016 DE 102016106373
(43) Veröffentlichungstag der Anmeldung: 11.10.2017
(73) Patentinhaber: GEFERTEC GmbH, 12681 Berlin (DE)
(72) Erfinder: Fischer, Georg, 13129 Berlin (DE); Röhrich, Tobias, 03185 Turnow-Preilack (DE); Haschke, Igor, 10437 Berlin (DE); Dr. Führer, Matthias, 04720 Döbeln (DE)
(74) Vertreter: Kaufmann, Sigfrid

(56) Entgegenhaltungen:
- WO-A1-2016/019435
- WO-A1-2017/121995
- DE-A1-102015 113 792
- JP-A- 2013 075 388

## Beschreibung

Die Erfindung betrifft einen Arbeitstisch, für eine Anlage zum Herstellen von insbesondere metallischen Formkörpern mittels eines additiven Fertigungsverfahrens, bei welchem der schichtweise Aufbau durch Abschmelzen eines Werkstoffes erfolgt, wobei zum Zweck einer erhöhten Aufbaurate des Formkörpers während der Fertigung eine Flüssigkeitstemperierung der bereits fertiggestellten Teile des Formkörpers ermöglicht ist.

Additive Fertigungsverfahren - auch bekannt unter den Bezeichnungen "generative Fertigung" oder "3D-Druck" - kamen in den letzten Jahren immer mehr in den Fokus der Werkzeugmaschinenbauer. Es sind unterschiedliche Techniken der additiven Fertigung bekannt, beispielsweise das Schmelzschichtungsverfahren (Fused Deposition Modeling -FDM), das selektive Lasersintern (SLS), das selektive Laserschmelzen (SLM) oder das Auftragsschweißen.

Eine wichtige, zu lösende Aufgabe ist die Fertigungsgeschwindigkeit, insbesondere bei der Fertigung metallischer Formkörper. Hohe Aufbauraten erlaubt das Auftragschweißen, bei welchem die Formkörper, d. h. dreidimensionale Strukturen, mittels Aufbringens eines schmelzflüssigen, metallischen oder metallhaltigen Materials schichtweise aufgebaut werden. Das aufzubringende Material kann in Form eines Pulvers, z. B. Metallpulver, oder auch in Form eines Schweißdrahtes bzw. -bandes, von dessen Endbereich Metall abgeschmolzen wird, vorliegen.

Das Aufschmelzen erfolgt z. B. mittels eines Lasers oder eines Lichtbogens. Ein Lichtbogen wird durch starke elektrostatische Felder (mittels Ionisation der Atmosphäre bzw. des Schutzgases) zwischen zwei Elektroden erzeugt, durch welchen z. B. die Drahtspitze aufgeschmolzen und tröpfchenweise Metall abgeschmolzen wird. Hierbei kann die Drahtspitze des Ausgangsmaterials eine der Elektroden sein, während die Gegenelektrode durch den aufzubauenden Formkörper selbst gebildet wird. Der Vorgang des Aufschmelzens bzw. Abscheidens ist stets mit einem unerwünschten Wärmeeintrag in den Formkörper und einem undefinierten Erstarrungsverhalten der Schmelze verbunden. Die Gefügeeigenschaften und die Eigenspannungszustände werden dabei, neben den Eigenschaften des Werkstoffes, maßgeblich von dem Abtransport der zum Aufschmelzen eingebrachten Wärmemenge durch thermische Leitung aus dem Formkörper beeinflusst. Die Abkühlgeschwindigkeit stellt außerdem den limitierenden Faktor in Bezug auf die maximale Aufbaurate dar.

Aus diesem Grunde wurden zur Wärmeabfuhr bzw. kontrollierten Temperierung eine aktive Kühlung für die Druckplattformen, auf die die Formkörper aufgebaut werden, vorgeschlagen, wie z. B. in US 2007 / 0 122 562 A1 beschrieben.

Auch die kontrollierte Temperierung des Formkörpers während der Fertigung mittels eines Kühlfluids ist bekannt. DE 10 2007 009 273 A1 zeigt z. B. ein Verfahren zur Herstellung eines dreidimensionalen Gegenstandes durch additives Auftragen und Verfestigen eines ausgewählten Teils einer pulverförmigen Materialschicht mittels eines Energie- oder Materialstrahls unter Erwärmung der bestrahlten Teile und deren Umgebung, wobei der während des wiederholten Auftragens und Bestrahlens aus einer Mehrzahl von Schichten gebildete Schichtkuchen zusätzlich, zumindest teilweise, von einem Fluid durchströmt wird, sodass die verfestigten Teile der Schichten während des Herstellungsprozesses permanent von dem durch die pulverförmigen Bereiche der Schichten strömenden Fluid gekühlt werden. Nachteilig bei diesem Verfahren ist, dass Flüssigkeiten, die im Vergleich zu Gasen eine größere Wärmemenge pro Zeiteinheit abführen können, in diesem Fall als Kühlfluid aufgrund ihrer Wechselwirkung mit dem Schichtkuchen ungeeignet sind.

Im Hinblick auf eine Reduzierung der Fertigungszeiten und eine Erweiterung der herstellbaren Formkörper wurden in den letzten zwei Jahren die bis dato nur translatorisch bewegbaren Druckplattformen mit zusätzlichen, rotatorischen Freiheitsgraden versehen. WO 2015/164502 A1 beschreibt ein 3D-Drucksystem mit einer um die z-Achse drehbaren Druckplattform. CN 104525947 A zeigt einen 3D-Drucker für metallische Formkörper, dessen Druckplattform um eine vertikale und eine horizontale Achse drehbar ist.

WO 2016/019435 offenbart eine Vorrichtung für die additive Fertigung, bei welcher mittels eines Bearbeitungskopfs ein erstes Material auf einer in einem mit einem quasi-flüssigen zweiten Material gefüllten Bauraum angeordneten, kippbaren Bauplattform abgeschieden wird.

Eine Vorrichtung für die additive Fertigung metallsicher Formkörper durch Sintern von Pulvermaterial ist in DE 10 2015 113 792 A1 beschrieben. Die Vorrichtung umfasst einen Artikulationsmechanismus, der eine Drehung der Bauplattform um wenigstens eine horizontale Achse ermöglicht.

WO 2017/121995 A1 zeigt eine Vorrichtung zur Herstellung von Formkörpern mittels eines Pulverbettverfahrens. Die Vorrichtung umfasst einen zylinderförmiger Bauraum mit einer entlang der Zylinderachse bewegbaren Fertigungsunterlage als Bauraumboden. Für die additive Fertigung wird eine dünne Schicht eines Pulvers auf die Oberfläche der Fertigungsunterlage bzw. bereits abgeschiedener Schichten verteilt und ein Energiestrahl entsprechend der geometrischen Querschnittsform des Formkörpers über die Pulverschicht geführt. Die Fertigungsunterlage wird innerhalb des Zylinders sukzessive nach jeder Schichtausbildung nach unten bewegt. Im unteren Bereich des Zylinders befindet sich eine Öffnung. Nach Fertigstellung des Formkörpers wird der Bauraum um 90° gekippt, sodass das überschüssige Pulver aus der Öffnung des Zylinders rieseln kann.

Aufgabe der Erfindung ist es, einen Arbeitstisch für eine Anlage zur additiv-generativen Fertigung eines Formkörpers zur Verfügung zu stellen, der eine hohe Flexibilität in der Formgebung des schichtweise aufzubauenden Formkörpers sowie eine hohe Aufbaurate verbunden mit einer aktiven Temperierung mittels einer Wärmeübertragungsflüssigkeit ermöglicht.

Die Lösung dieser Aufgabe erfolgt durch einen Arbeitstisch zur additiven Fertigung mit den Merkmalen des Anspruchs 1. Zweckmäßige Weiterbildungen der Erfindung sind Gegenstand der Unteransprüche.

Gemäß der Offenbarung wird ein Arbeitstisch für die additive Fertigung eines Formkörpers, insbesondere eines metallischen Formkörpers, der aus einem draht- oder bandförmigen, an der Spitze unter Energiezufuhr, vorzugsweise mit einem Lichtbogen, abzuschmelzenden Werkstoff schichtweise aufgebaut wird, bereitgestellt, wobei mittels des Arbeitstisches während der Fertigung eine Rotation des Formkörpers um zwei Achsen sowie die Temperierung der bereits fertiggestellten Teile des Formkörpers mittels eines denselben umschließenden, flüssigen oder fließfähigen Wärmeübertragungsfluids (im Folgenden allgemein als "Flüssigkeit" bezeichnet) ermöglicht ist.

Das hierin verwendete Verb "umschließen" beinhaltet sowohl ein Umschließen des Formkörpers mit strömender, d. h. bewegter, Flüssigkeit, als auch ein Umschließen mit "stehender", d. h. im Wesentlichen unbewegter, Flüssigkeit.

Der erfindungsgemäße Arbeitstisch umfasst einen wannenförmigen, d. h. nach oben offenen, Bauraum, in dessen Bodenbereich eine, z. B. plattenförmige, Fertigungsunterlage angeordnet ist, wobei die Fertigungsunterlage als Bauplattform für den additiven Aufbau des Formkörpers vorgesehen ist.

Die Fertigungsunterlage ist vorzugsweise zumindest auf dem für den Aufbau des Formkörpers genutzten Bereich der Oberfläche elektrisch leitfähig sowie mittels eines entsprechenden Anschlusses geerdet.

Bevorzugt ist zumindest die Fertigungsunterlage um eine senkrecht zu derselben (d. h. dem für die Fertigung vorgesehenen, z. B. im Wesentlichen ebenen, Oberflächenbereich) bzw. dem Bauraumboden ausgerichtete, vorzugsweise durch den Massenschwerpunkt der Fertigungsunterlage verlaufende, Drehachse rotierbar, wobei hier eine Rotation der Fertigungsunterlage um wenigstens 360° (d. h. zumindest eine einfache Rotation, vorzugsweise jedoch eine unendliche Anzahl von Rotationen) ermöglicht ist.

Der Bauraum, im Wesentlichen bestehend aus dem Bauraumboden und Bauraumseitenwänden, ist als flüssigkeitsdichte Wanne ausgebildet, sodass er teilweise oder vollständig mit einer Wärmeübertragungsflüssigkeit flutbar ist. Hierbei ist eine Bauraum-Seitenwand lösbar mit den beiden benachbart angeordneten Bauraum-Seitenwänden und dem Bauraumboden verbindbar, d. h., der Bauraum kann durch Entfernen dieser einen lösbaren Bauraum-Seitenwand, im Folgenden als "Schottwand" bezeichnet, seitlich geöffnet werden. Dichtungen an den Bauraum-Seitenwänden verhindern bei eingesetzter Schottwand ein Austreten von Flüssigkeit aus dem Bauraum.

Somit ist der Bauraum (nur dann) als flüssigkeitsdichte Wanne ausgebildet, wenn die Schottwand eingesetzt ist, sodass eine Flüssigkeit einbringbar ist, d. h. der Formkörper in der Flüssigkeit aufgebaut werden kann.

Der Bauraum ist weiterhin innerhalb einer Bauraumaufnahme um eine parallel zu dem Bauraumboden (und vorzugsweise senkrecht zu der Drehachse der Fertigungsunterlage) angeordnete Kippachse um wenigstens 45°, vorzugsweise mehr als 90°, kippbar gelagert.

Die lösbare Bauraum-Seitenwand, d. h. die Schottwand, ist hierbei radial zu der Kippachse beabstandet und vorzugsweise parallel zu der Kippachse ausgerichtet. Die beiden benachbart zu dieser Schottwand angeordneten Bauraum-Seitenwände sind somit im Wesentlichen senkrecht zu der Kippachse angeordnet, d. h. die Kippachse verläuft durch diese beiden Seitenwände. Die Kipprichtung des Bauraumes ist derart, dass diejenige Seite des Bauraumes, an der sich die Schottwand bzw. die durch die Schottwand zu verschließende Öffnung befindet, beim Kippen nach oben gedreht wird.

Vorzugsweise bestehen der Bauraum und die Fertigungsunterlage aus einem korrosionsbeständigen Material oder sind mit einem solchen beschichtet.

Das additive Fertigen eines Formkörpers unter Verwendung des erfindungsgemäßen Arbeitstisches kann durch Auftragsschweißen mittels eines Lasers, Elektronenstrahls oder eines Lichtbogens erfolgen, wobei das schichtweise Aufbauen nicht auf diese Art der additiven Fertigung eingeschränkt ist.

Der Vorteil des erfindungsgemäßen Arbeitstisches ist, dass Überhänge bzw. Hinterschneidungen des Formkörpers mittels additiver Fertigung unter Verzicht auf eine (verlorene) Stützstruktur herstellbar sind, indem der Formkörper, d. h. die Fertigungsunterlage, um die Kippachse gekippt und die Drehachse rotiert wird. So erfolgt der Materialauftrag immer in lotrechter Richtung (d. h. die Schmelze bleibt in Waage), wobei z. B. auf eine Seitenwand des Formkörpers Material zur Erstellung eines Überhanges aufgetragen wird.

Durch die Drehachse bietet sich außerdem der Vorteil, dass rotationssymmetrische Formkörper einfacher herstellbar sind, da die Umrechnung der rotationssymmetrischen Strukturen in eine x- und y-Bewegung des Druckkopfes entfällt.

Indem der Bauraum als Wanne ausgebildet ist, ist eine kontinuierliche Temperierung der bereits fertiggestellten Formkörperteile mit einer durch den Bauraum strömenden bzw. in dem Bauraum stehenden Flüssigkeit ermöglicht, sodass die Temperatur der bereits fertiggestellten Teile des Formkörpers definiert eingestellt werden kann, wodurch z. B. der Materialverzug beim Abkühlen der Schmelze reduzierbar ist. Durch die Temperierung ist es also ermöglicht, die Erwärmung bzw. Abkühlung des Formkörpers während seines schichtweisen Aufbaus immer im werkstoffspezifisch optimalen Bereich zu halten. Eine für die Herstellung bestmögliche Wärmeführung ermöglicht zusätzlich eine erhöhte Prozessgeschwindigkeit, da ein Wärmestau vermieden und dadurch die Schichtauftragsraten ohne Verschlechterung der spezifischen Werkstoffeigenschaften deutlich erhöht werden können.

Indem die bereits fertiggestellten Teile des Formkörpers ständig von einem flüssigen Wärmeübertragungsfluid umschlossen sind, sind diese Bereiche zudem äußerlich, z. B. vor Spritzern, geschützt, was den erforderlichen Nachbearbeitungsaufwand erheblich minimieren kann. Außerdem kann die den Formkörper umschließende Wärmeübertragungsflüssigkeit als Oxidationsschutz wirken. Dies ist insbesondere dann der Fall, wenn z. B. eine korrosionsverhütende Flüssigkeit verwendet wird.

Gemäß einer Ausgestaltung ist die Bauraumaufnahme, in welcher der Bauraum kippbar gelagert ist, in Form eines Joches ausgebildet, d. h. sie umfasst zwei (lotrechte) Haltestreben, die in ihrem unteren Bereich z. B. durch einen Balken oder eine Platte verbunden sind. Weiterhin umfasst die Bauraumaufnahme (z. B. zwei) Bauraumaufnahmen-Seitenwände, die unter Ausbildung einer flüssigkeitsdichten, den Bauraum umschließenden Bauraumaufnahme-Wanne passgenau, d. h. von ihrer Form genau passend, und lösbar mit dem Joch der Bauraumaufnahme verbindbar sind.

Somit kann in die Bauraumaufnahme, wenn die Bauraumaufnahmen-Seitenwände eingesetzt sind, Flüssigkeit eingefüllt werden, sodass der Bauraum innerhalb eines Flüssigkeitsbades hin und her gekippt werden kann. Hierbei ist es vorteilhaft, die Schottwand zu entfernen, um in gekipptem Zustand des Bauraumes uneingeschränkten Zugang z. B. eines Bearbeitungskopfes des 3D-Druckers zum Formkörper bei gleichzeitiger Temperierung mit der den Formkörper umschließenden Flüssigkeit zu gewährleisten.

Es kann auch vorgesehen sein, dass die Bauraumaufnahme monolithisch als Wanne ausgebildet ist, wobei alle Seitenwände fester Bestandteil der Bauraumaufnahme sind. Diese Art der Bauraumaufnahme bietet den Vorteil, dass Aufwände für die Abdichtung aufgrund der entfernbaren Seitenwände entfallen.

Weiterhin kann vorgesehen sein, dass die Fertigungsunterlage temperierbar ist. Hierzu kann die Fertigungsunterlage einzelne Fluidkanäle oder ein bzw. mehrere zusammenhängende Kanalsysteme aufweisen, durch welche, insbesondere zu Beginn der Fertigung, ein flüssiges Wärmeübertragungsfluid durchgeleitet wird. So kann z. B. der beim Aufbau der ersten Schichten, wenn in den Bauraum noch keine Wärmeübertragungsflüssigkeit eingeleitet wurde, erfolgende Wärmeeintrag effektiv durch Kühlung der Fertigungsunterlage abgeführt werden.

Weiterhin kann vorgesehen sein, dass die Fertigungsunterlage, beispielsweise auf ihrer Deckfläche, auf welcher der Formkörper aufgebaut wird, eine Vielzahl von einzeln verschließbaren Wärmeübertragungsfluid-Austrittsöffnungen aufweist. So kann das durch die Fertigungsunterlage geleitete Wärmeübertragungsfluid aus derselben heraus in den Bauraum eintreten.

Weiterhin kann vorgesehen sein, dass die Fertigungsunterlage für eine (unterstützende) aktive Kühlung Peltierelemente aufweisen.

Die Erfindung kann derart ausgebildet sein, dass die Fertigungsunterlage (um die Drehachse) drehbar auf dem Bauraumboden gelagert ist. Der Rotationsantrieb zur Rotation der Fertigungsunterlage kann hierbei innerhalb des Bauraumes auf oder in dem Bauraumboden angeordnet sein, sodass der Bauraum mitsamt dem Rotationsantrieb gekippt wird. Es ist aber auch möglich, dass der Rotationsantrieb zur Rotation der Fertigungsunterlage außerhalb des Bauraumes (oder sogar außerhalb der Bauraumaufnahme) angeordnet ist, wobei die Fertigungsunterlage mittels geeigneter Getriebemittel oder Maschinenelementen zur Drehmomentübertragung, wie z. B. Kardan- oder Königswellen oder Zahnrädern, mit dem Antrieb verbunden ist.

Es kann auch vorgesehen sein, dass die Fertigungsunterlage fest mit dem Bauraum verbunden ist, wobei die Bauraumaufnahme (und somit auch der Bauraum und die Fertigungsunterlage) um die Drehachse rotierbar ist.

Da der Arbeitstisch für eine additive Fertigung in einer Flüssigkeit vorgesehen ist, kann vor oder während der Fertigung flüssiges Wärmeübertragungsfluid in den Bauraum eingeleitet werden. Für eine Regelung der einzuleitenden bzw. durchzuleitenden Flüssigkeitsmenge kann der Arbeitstisch eine Sensoreinrichtung zum Feststellen eines Flüssigkeits-Füllstands innerhalb des Bauraumes, wenigstens eine regelbare Flüssigkeits-Einlassöffnung und -Auslassöffnung sowie eine mit denselben verbundene Regeleinrichtung aufweisen.

In die Seitenwände bzw. den Boden des Bauraums oder der wannenförmigen Bauraumaufnahme können Flüssigkeits-Einlassöffnungen, durch welche die Wärmeübertragungsflüssigkeit in den Bauraum eintritt, und Flüssigkeits-Auslassöffnungen, durch welche die Wärmeübertragungsflüssigkeit wieder heraustritt, eingebracht sein. An den Einlass- und Auslassöffnungen für die Wärmeübertragungsflüssigkeit können einzeln ansteuerbare Ventile zum Öffnen bzw. Schließen der Öffnungen vorgesehen sein.

Insbesondere kann die Regeleinrichtung eingerichtet sein, anhand der mit der Sensoreinrichtung erfassten Messwerte die Menge der in den Bauraum zu füllenden bzw. durchzuleitenden Wärmeübertragungsflüssigkeit zu bestimmen und mit dem sukzessiven Aufbau des Formkörpers bzw. dem Kippen des Bauraumes den Flüssigkeits-Füllstand entsprechend nachzuführen, sodass z. B. stets die gerade bearbeitete Schicht aus der Flüssigkeit herausragt während die bereits aufgebauten Teile des Formkörpers von der Flüssigkeit umschlossen werden.

Die Sensoreinrichtung zur Erfassung der Höhe des Flüssigkeits-Füllstandes im Bauraum kann z. B. optische Sensoren, die auf Basis von Extinktion oder Reflektion arbeiten, oder allgemein bekannte Feuchtigkeitssensoren umfassen.

Es kann auch ein mechanischer Füllstandsregler (z. B. mit einem sog. Schwimmer) vorgesehen sein, der den Füllstand beispielsweise durch Freigabe der in entsprechender Höhe in den Seitenwänden des Bauraums eingebrachten Flüssigkeits-Einlassöffnungen bzw. -Auslassöffnungen regelt.

Weiterhin kann der Arbeitstisch ein Kühl-/Heizsystem zur Regelung der Temperatur der in den Bauraum einzuleitenden bzw. darin befindlichen Flüssigkeit umfassen, wodurch eine definierte Temperatur bzw. Abkühlrate des Formkörpers eingestellt werden kann. Hierbei kann ein aktives Kühlen des Formkörpers, aber auch ein aktives Heizen vorgesehen sein. Insbesondere kann vorgesehen sein, dass an jeder Flüssigkeits-Einlassöffnung ein Kühl-/Heizsystem angebracht ist, sodass ein Temperaturgradient innerhalb der in dem Bauraum befindlichen Flüssigkeit einstellbar ist. Indem der Bauraum, z. B. an seinen Seitenwänden und/oder seiner Bodenplatte, regelbare Flüssigkeits-Einlassöffnungen und -Auslassöffnungen aufweist, kann die Wärmeübertragungsflüssigkeit stetig während der generativen Fertigung fließen, d. h. die bereits fertiggestellten Schichten des zu fertigenden Formkörpers umströmen. Außerdem ist auch eine Füllstandsregelung beim Kippen des Bauraumes ermöglicht.

Weiterhin kann vorgesehen werden, dass der Arbeitstisch wenigstens einen Temperatursensor aufweist, mittels dessen eine Temperatur des gesamten Formkörpers, eines Bereiches des Formkörpers oder der Wärmeübertragungsflüssigkeit messbar ist. Hierbei kann der Temperatursensor ausgebildet sein, die Temperatur integral (z. B. in Form eines Thermistors zur Messung eines gemittelten Messwerts) oder ortsaufgelöst (z. B. in Form einer Wärmebildkamera oder eines Kamerasystems mit angeschlossener Computereinheit zur Aufnahme und Auswertung von zweidimensionalen Wärmebildern) zu messen.

Durch die kontinuierliche Überwachung der Temperatur ist es möglich, auf unerwünschte Änderungen der Temperatur des Formkörpers, insbesondere in der Umgebung des schmelzflüssig abgeschiedenen Werkstoffes, instantan durch eine entsprechende Nachregelung der Wärmeübertragungsflüssigkeits-Temperatur und/oder eine Überflutung des Formkörpers mit der Wärmeübertragungsflüssigkeit zu reagieren.

Außerdem kann vorgesehen sein, dass die senkrecht zu der Kippachse angeordneten Bauraum-Seitenwände (d. h. diejenigen Seitenwände, an denen der Bauraum in der Bauraumaufnahme hängt), z. B. hydraulisch, angetrieben verstellbare Aufhängungen aufweisen, mittels derer der Bauraum translatorisch in Bezug zur Bauraumaufnahme und somit die Kippachse relativ zum Bauraum verschiebbar ist. Eine Verschiebung der Kippachse während der Fertigung hat den Vorteil, dass die Kippachse immer in der Nähe des Gesamtschwerpunktes (von Bauraum und ständig wachsendem Formkörper) gehalten werden kann.

Weiterhin kann der Arbeitstisch eine Trocknungseinrichtung, beispielsweise in Form einer Gebläseeinrichtung für Druckluft oder einer Infrarotstrahlungsquelle, beinhalten, mittels der bei Absenken des Flüssigkeitsspiegels oder bei Kippen des Bauraumes aus der Wärmeübertragungsflüssigkeit auftauchende Bereiche des Formkörpers aktiv getrocknet werden können.

Die Offenbarung wird nachfolgend anhand eines Ausführungsbeispiels näher erläutert, wobei gleiche oder ähnliche Merkmale mit denselben Bezugszeichen versehen sind. Dazu zeigen in schematischer Darstellung die
Figur 1: eine Ausgestaltung des Arbeitstisches ohne Schottwand in Schrägdraufsicht,
Figur 2: den Arbeitstisch mit eingesetzter Schottwand in Schrägdraufsicht;
Figur 3: den Arbeitstisch mit Bauraumaufnahme-Wanne in Schrägdraufsicht; und
Figur 4: den Arbeitstisch mit gekipptem Bauraum im Querschnitt.

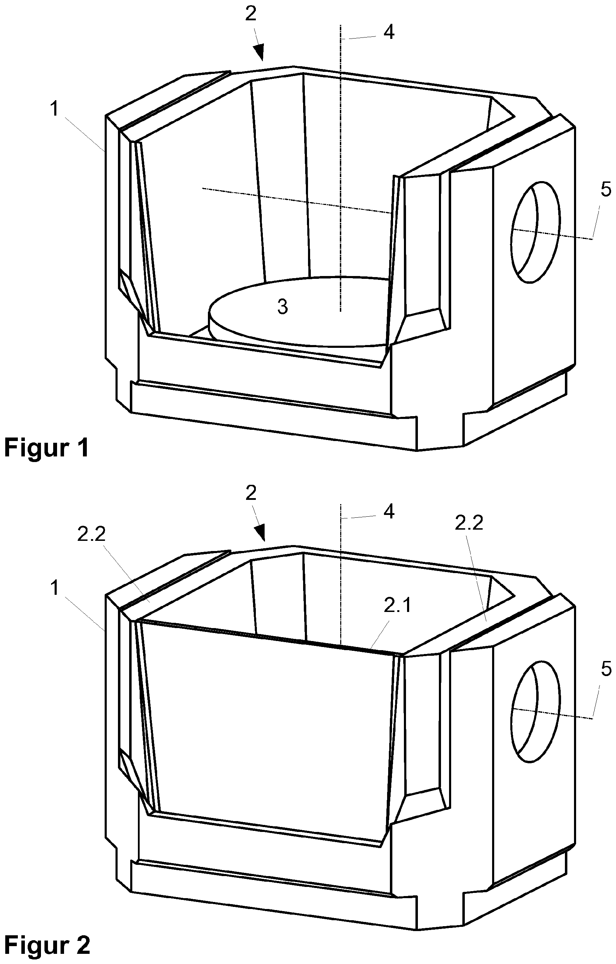

Der Bauraum 2 ist, wie in Figur 1 gezeigt, um die Kippachse 5 kippbar innerhalb der Bauraumaufnahme 1 gelagert. In dem Bauraum 2 befindet sich die innerhalb des Bauraumes 2 um die Drehachse 4 rotierbare Fertigungsunterlage 3.

Der Bauraum 2 umfasst die Bauraum-Seitenwände 2.2 sowie die lösbare Schottwand 2.1, die, wie in Figur 2 zu sehen, zur Ausbildung einer flüssigkeitsdichten Wanne einsetzbar ist.

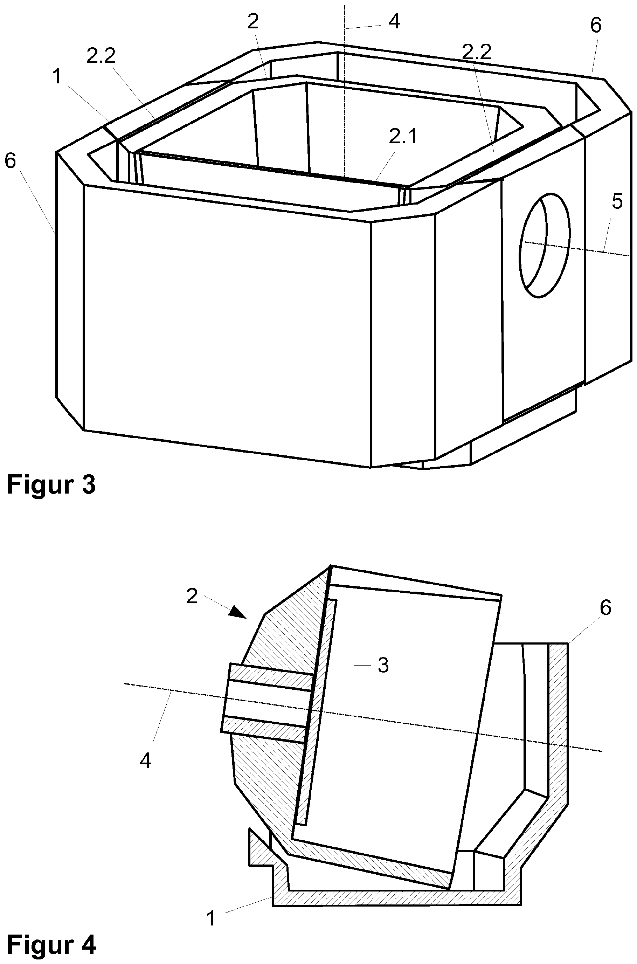

Figur 3 zeigt, den Bauraum 2, der in der Bauraumaufnahme 1, die mittels der beiden Bauraumaufnahmen-Seitenwände 6 zu einer flüssigkeitsdichten, den Bauraum 2 umschließenden Bauraumaufnahme-Wanne ausgebaut ist, gelagert ist.

Figur 4 stellt den Arbeitstisch mit gekipptem Bauraum 2 im Querschnitt dar, wobei der Bauraum 2 aufgrund der entfernten Schottwand 2.1 auch in diesem gekippten Zustand nach oben hin offen ist.

### Bezugszeichenliste

- 1: Bauraumaufnahme
- 2: Bauraum
- 2.1: lösbare Bauraum-Seitenwand / Schottwand
- 2.2: Bauraum-Seitenwand
- 3: Fertigungsunterlage
- 4: Drehachse
- 5: Kippachse
- 6: Bauraumaufnahmen-Seitenwand

## Patentansprüche

1. Arbeitstisch für die additive Fertigung eines Formkörpers durch Abschmelzen von einem draht- oder bandförmigen Werkstoff an dessen Spitze und Abscheiden des schmelzförmigen Werkstoffs in einzelnen aufeinanderfolgenden Schichten auf einer in einem Bauraum (2) angeordneten Fertigungsunterlage (3) des Arbeitstisches, **dadurch gekennzeichnet, dass**
- der Bauraum (2) wannenförmig ausgebildet ist, aufweisend einen Bauraumboden und Bauraumseitenwände, wobei der Bauraum (2) flüssigkeitsdicht ist zur zumindest teilweisen Flutung mit einer Wärmeübertragungsflüssigkeit; und
- die Fertigungsunterlage (3) auf dem Bauraumboden drehbar befestigt oder die Fertigungsunterlage (3) fest mit dem Bauraumboden verbunden ist, und
- der Bauraum (2) innerhalb einer Bauraumaufnahme (1) um eine parallel zu dem Bauraumboden angeordnete Kippachse (5) mittels Lager um wenigstens 45° kippbar gelagert ist,
- wobei eine radial zu der Kippachse (5) beabstandete Bauraum-Seitenwand (2.1) eine entfernbare Schottwand ist.

2. Arbeitstisch nach Anspruch 1, **dadurch gekennzeichnet, dass** zumindest die Fertigungsunterlage (3) um eine senkrecht zu der Kippachse (5) ausgerichtete Drehachse (4) rotierbar ist.

3. Arbeitstisch nach Anspruch 1 oder 2, **dadurch gekennzeichnet, dass** die Bauraumaufnahme (1) in Form eines Joches ausgebildet ist, wobei der Arbeitstisch Bauraumaufnahmen-Seitenwände (6) umfasst, die unter Ausbildung einer flüssigkeitsdichten, den Bauraum (2) umschließenden Bauraumaufnahme-Wanne von ihrer Form genau passend und lösbar mit dem Joch der Bauraumaufnahme (1) verbunden sind.

4. Arbeitstisch nach Anspruch 1 oder 2, **dadurch gekennzeichnet, dass** die Bauraumaufnahme (1) monolithisch in Form einer den Bauraum (2) umschließenden Wanne ausgebildet ist.

5. Arbeitstisch nach einem der vorstehenden Ansprüche, **dadurch gekennzeichnet, dass** die Fertigungsunterlage (3) Fluidkanäle beinhaltet, die von einem flüssigen Wärmeübertragungsfluid durchströmbar sind.

6. Arbeitstisch nach einem der Ansprüche 2 bis 5, **dadurch gekennzeichnet, dass** die Fertigungsunterlage (3) rotierbar auf dem Bauraumboden befestigt ist, wobei der Antrieb zur Rotation der Fertigungsunterlage (3) innerhalb des Bauraumes (2) in einem gegen Feuchtigkeit gekapselten Gehäuse angeordnet ist.

7. Arbeitstisch nach einem der Ansprüche 2 bis 5, **dadurch gekennzeichnet, dass** die Fertigungsunterlage (3) rotierbar auf dem Bauraumboden befestigt ist, wobei der Antrieb zur Rotation der Fertigungsunterlage (3) außerhalb des Bauraumes (2) angeordnet und die Fertigungsunterlage (3) mittels eines Getriebes oder eines Maschinenelementes zur Drehmomentübertragung mit demselben verbunden ist.

8. Arbeitstisch nach einem der Ansprüche 2 bis 5, **dadurch gekennzeichnet, dass** die Fertigungsunterlage (3) fest mit dem Bauraum (2) verbunden ist, wobei die Bauraumaufnahme (1) angetrieben um die Drehachse (4) rotierbar ist.

9. Arbeitstisch nach einem der vorstehenden Ansprüche, **dadurch gekennzeichnet, dass** er eine Einrichtung zum Bestimmen eines Flüssigkeits-Füllstands innerhalb des Bauraumes (2), wenigstens eine regelbare Flüssigkeits-Einlassöffnung und -Auslassöffnung sowie eine mit denselben verbundene Regeleinrichtung zur Regelung des Flüssigkeits-Füllstands innerhalb des Bauraumes (2) aufweist.

10. Arbeitstisch nach einem der vorstehenden Ansprüche, **dadurch gekennzeichnet, dass** das die Fertigungsunterlage (3) einen Masseanschluss zum Erden derselben aufweist.

11. Arbeitstisch nach einem der vorstehenden Ansprüche, **dadurch gekennzeichnet, dass** der Bauraum (2) und die Fertigungsunterlage (3) aus einem korrosionsbeständigen Material bestehen oder korrosionsbeständig beschichtet sind.

12. Arbeitstisch nach einem der vorstehenden Ansprüche, **dadurch gekennzeichnet, dass** er wenigstens einen Temperatursensor aufweist.

13. Arbeitstisch nach einem der vorstehenden Ansprüche, **dadurch gekennzeichnet, dass** die senkrecht zu der Kippachse (5) angeordneten Bauraumseitenwände (2.2) angetrieben verstellbare Aufhängungen aufweisen, mittels derer die Kippachse (5) relativ zum Bauraum (2) verschiebbar ist.

14. Arbeitstisch nach einem der vorstehenden Ansprüche, **dadurch gekennzeichnet, dass** er eine Trocknungseinrichtung zur Trocknung der aus einem flüssigen Wärmeübertragungsfluid heraustretenden Bereiche des Formkörpers aufweist.

## Claims

1. A work table for additive manufacturing of a shaped body by melting a wire-like or strip-like material at the tip thereof and depositing the molten material in individual successive layers on a manufacturing support (3) of the work table arranged in an installation space (2),
**characterised in that**
- the installation space (2) is trough-shaped, having an installation space bottom and installation space side walls, wherein the installation space (2) is liquid-tight for at least partial flooding with a heat transfer liquid; and
- the manufacturing support (3) is rotatably fastened on the installation space bottom or the manufacturing support (3) is fixedly connected to the installation space bottom, and
- the installation space (2) is mounted by means of bearings within an installation space holder (1) so as to be tiltable by at least 45° about a tilt axis (5) arranged parallel to the installation space bottom,
- wherein an installation space side wall (2.1) distanced radially from the tilt axis (5) is a removable delimiting wall.

2. The work table according to claim 1, **characterised in that** at least the manufacturing support (3) is rotatable about a rotation axis (4) oriented perpendicularly to the tilt axis (5).

3. The work table according to either one of claims 1 or 2, **characterised in that** the installation space holder (1) is configured in the form of a yoke, wherein the work table comprises installation space holder side walls (6) which are connected to the yoke of the installation space holder (1) releasably and in a manner precisely matching the shape thereof, so as to form a liquid-tight installation space holder trough surrounding the installation space (2).

4. The work table according to either one of claims 1 or 2, **characterised in that** the installation space holder (1) is formed monolithically in the form of a trough surrounding the installation space (2).

5. The work table according to any one of the preceding claims, **characterised in that** the manufacturing support (3) includes fluid channels through which a liquid heat transfer fluid can flow.

6. The work table according to any one of claims 2 to 5, **characterised in that** the manufacturing support (3) is fastened rotatably on the installation space bottom, wherein the drive for rotation of the manufacturing support (3) is arranged within the installation space in a housing encapsulated with respect to moisture.

7. The work table according to any one of claims 2 to 5, **characterised in that** the manufacturing support (3) is fastened rotatably on the installation space bottom, wherein the drive for rotation of the manufacturing support (3) is arranged outside the installation space (2) and the manufacturing support (3) is connected thereto by means of a transmission or a machine element for torque transmission.

8. The work table according to any one of claims 2 to 5, **characterised in that** the manufacturing support (3) is fixedly connected to the installation space (2), wherein the installation space holder (1) is driven rotatably about the rotation axis (4).

9. The work table according to any one of the preceding claims, **characterised in that** it comprises a device for determining a liquid fill level within the installation space (2), at least one controllable liquid inlet opening and outlet opening, and a control device connected thereto for controlling the liquid fill level within the installation space (2).

10. The work table according to any one of the preceding claims, **characterised in that** the manufacturing support (3) comprises a ground connection in order to ground said support.

11. The work table according to any one of the preceding claims, **characterised in that** the installation space (2) and the manufacturing support (3) consist of a corrosion-resistant material or are coated with a corrosion-resistant coating.

12. The work table according to any one of the preceding claims, **characterised in that** it comprises at least one temperature sensor.

13. The work table according to any one of the preceding claims, **characterised in that** the installation space side walls (2.2) arranged perpendicularly to the tilt axis (5) comprise driven adjustable mounting points, by means of which the tilt axis (5) is displaceable relative to the installation space (2).

14. The work table according to any one of the preceding claims, **characterised in that** it comprises a drying device for drying the regions of the shaped body exiting from a liquid heat transfer fluid.

## Revendications

1. Table de travail destinée à la fabrication additive d'un corps moulé par fusion d'une matière en forme de fil ou de bande au niveau de son extrémité et le dépôt de la matière sous forme fondue en couches individuelles successives sur une sous-couche de fabrication (3) de la table de travail disposée dans un espace de construction (2),
**caractérisée en ce que**
- l'espace de construction (2) est conçu sous forme d'un bac présentant un fond d'espace de construction et des parois latérale d'espace de construction, l'espace de construction (2) étant étanche aux liquides pour un envahissement au moins partiel par un liquide caloporteur ; et
- la sous-couche de fabrication (3) est fixée en pouvant être mise en rotation sur le fond d'espace de construction ou la sous-couche de fabrication (3) est reliée solidement avec le fond d'espace de construction, et
- l'espace de construction (2) est logé à l'intérieur d'un logement d'espace de construction (1) pouvant être pivoté d'au moins 45 ° par rapport à l'axe de pivotement (5) disposé parallèlement par rapport au fond d'espace de construction au moyen de paliers,
- où une paroi latérale d'espace de construction (2.1) espacée radialement par rapport à l'axe de pivotement (5) est une cloison étanche amovible.

2. Table de travail selon la revendication 1, **caractérisée en ce qu'**au moins la sous-couche de fabrication (3) peut être mise en rotation autour d'un axe de rotation (4) orienté perpendiculairement par rapport à l'axe de pivotement (5).

3. Table de travail selon la revendication 1 ou 2, **caractérisée en ce que** le logement d'espace de construction (1) est conçu sous la forme d'un étrier, la table de travail comprenant des parois latérales de logement d'espace de construction (6) qui sont reliées de manière amovible et ajustées exactement de par leur forme avec l'étrier du logement d'espace de construction (1) moyennant la formation d'un bac de logement d'espace de construction étanche aux liquides, entourant l'espace de construction (2).

4. Table de travail selon la revendication 1 ou 2, **caractérisée en ce que** le logement d'espace de construction (1) est conçu monolithique sous la forme d'un bac entourant l'espace de construction (2).

5. Table de travail selon l'une des revendications précédentes, **caractérisée en ce que** la sous-couche de fabrication (3) contient des canaux de fluide qui peuvent être traversés par un fluide caloporteur liquide.

6. Table de travail selon l'une des revendications 2 à 5, **caractérisée en ce que** la sous-couche de fabrication (3) est fixée en pouvant être mise en rotation sur le fond d'espace de construction, le système d'entraînement pour la rotation de la sous-couche de fabrication (3) étant disposé à l'intérieur de l'espace de construction dans un boîtier encapsulé vis-à-vis de l'humidité.

7. Table de travail selon l'une des revendications 2 à 5, **caractérisée en ce que** la sous-couche de fabrication (3) est fixée en pouvant être mise en rotation sur le fond d'espace de construction, le système d'entraînement pour la rotation de la sous-couche de fabrication (3) étant disposé à l'extérieur de l'espace de construction (2) et la sous-couche de fabrication (3) est reliée au moyen d'un entraînement ou d'un élément de machine pour la transmission d'un couple de rotation avec celui-ci.

8. Table de travail selon l'une des revendications 2 à 5, **caractérisée en ce que** la sous-couche de fabrication (3) est solidement reliée avec l'espace de construction (2), le logement d'espace de construction (1) pouvant être mis en rotation entraîné autour de l'axe de rotation (4).

9. Table de travail selon l'une des revendications précédentes, **caractérisée en ce qu'**elle présente un dispositif destiné à la détermination d'un niveau de remplissage de liquide à l'intérieur de l'espace de construction (2), au moins un orifice d'entrée de liquide réglable et un orifice de sortie, ainsi qu'un dispositif de réglage relié à ceux-ci pour le réglage du niveau de remplissage de liquide à l'intérieur de l'espace de construction (2).

10. Table de travail selon l'une des revendications précédentes, **caractérisée en ce que** la sous-couche de fabrication (3) présente une mise à la terre de celle-ci.

11. Table de travail selon l'une des revendications précédentes, **caractérisée en ce que** l'espace de construction (2) et la sous-couche de fabrication (3) sont constitués d'un matériau résistant à la corrosion ou sont revêtus avec un produit résistant à la corrosion.

12. Table de travail selon l'une des revendications précédentes, **caractérisée en ce qu'**elle présente au moins un capteur de température.

13. Table de travail selon l'une des revendications précédentes, **caractérisée en ce que** les parois latérales d'espace de construction (2.2) disposées perpendiculairement par rapport à l'axe de pivotement (5) présentent des suspensions réglables entraînées au moyen desquelles l'axe de pivotement (5) peut être déplacé par rapport à l'espace de construction (2).

14. Table de travail selon l'une des revendications précédentes, **caractérisée en ce qu'**elle présente un dispositif de séchage pour le séchage des zones du corps moulé retirées d'un fluide caloporteur liquide.
